# EUROPÄISCHE PATENTSCHRIFT

(11) **EP 1 334 389 B1**
(45) Veröffentlichungstag und Bekanntmachung des Hinweises auf die Patenterteilung: **09.03.2005**
(21) Anmeldenummer: 01992906.6
(22) Anmeldetag: 01.11.2001
(51) Int. Cl.: G02B 6/293

(54) **EINRICHTUNG ZUR ÜBERTRAGUNG OPTISCHER SIGNALE MIT VERBESSERTEN ÜBERTRAGUNGSEIGENSCHAFTEN**
DEVICE FOR THE TRANSMISSION OF OPTICAL SIGNALS WITH IMPROVED TRANSMISSION PROPERTIES
DISPOSITIF PERMETTANT UNE TRANSMISSION AMELIOREE DE SIGNAUX OPTIQUES

(30) Priorität: 01.11.2000 WO PCT/US00/41720; 01.05.2001 DE 10121204; 01.05.2001 DE 10121203
(43) Veröffentlichungstag der Anmeldung: 13.08.2003
(73) Patentinhaber: SCHOTT AG, 55122 Mainz (DE)
(72) Erfinder: PAWLOWSKI, Edgar, 55271 Stadingen-Elsheim (DE); GERSTNER, Klaus, 55129 Mainz (DE); SCHLATTERBECK, Dirk, 55118 Mainz (DE); PEUCHERT, Ulrich, 55294 Bodenheim (DE); SPRENGARD, Rüdiger, 55129 Mainz (DE); KÄLBER, Tobias, 55116 Mainz (DE); BRINKMANN, Matthias, 55268 Nieder-Olm (DE); WALTHER, Marten, 55270 Engelstadt (DE)
(74) Vertreter: Herden, Andreas, Dipl.-Ing.
(86) Internationale Anmeldenummer: PCT/EP2001/012669
(87) Internationale Veröffentlichungsnummer: WO 2002/037151

(56) Entgegenhaltungen:
- EP-A- 0 617 527
- WO-A-99/42872
- US-A- 5 846 638
- ZIRNGIBL M ET AL: "High performance, 12 frequency optical multichannel controller" ELECTRONICS LETTERS, IEE STEVENAGE, GB, Bd. 30, Nr. 9, 29. April 1994 (1994-04-29), Seiten 700-701, XP006000489 ISSN: 0013-5194
- ISHII H ET AL: "ZERO INSERTION LOSS OPERATIONS IN MONOLITHICALLY INTEGRATED WDM CHANNEL SELECTORS" IEEE PHOTONICS TECHNOLOGY LETTERS, IEEE INC. NEW YORK, US, Bd. 11, Nr. 2, Februar 1999 (1999-02), Seiten 242-244, XP000803438 ISSN: 1041-1135

## Beschreibung

Die Erfindung betrifft eine Einrichtung zur Übertragung optischer Signale mit zumindest einem Wellenleiter, der einen dotierten Bereich aufweist, in welchen ein Material eingebracht ist, welches zur Verstärkung optischer Signale geeignet ist.

In der optischen Nachrichten- und Übertragungstechnik treten bei der Signalübertragung häufig Absorptionen auf, welche über einen vorgegebenen spektralen Bereich verschieden sind oder sich sogar zeitlich in deren spektralen Eigenschaften ändern können. Hierbei kann es jedoch zu Übertragungsverlusten kommen, welche häufig durch eine einfache lineare Verstärkung aller Spektralbereiche nicht mehr zu korrigieren sind. Selbst wenn versucht würde, die Signale vor deren Übertragung äußerst hoch zu verstärken können insbesondere nichtlineare Phänomene in zu stark verstärkten spektralen Bereichen wiederum zu Verlusten der Übertragungsqualität führen.

Die EP 0488 266 B1 beschreibt einen optischen Koppler für eine Vielzahl optischer Fasern, bei welchem ein verstärkendes Material in der Nähe eines in dessen Durchmesser reduzierten Claddings oder Mantel des Wellenleiters angeordnet wird. Hierdurch kann eine Verstärkung der in der Faser übertragenen optischen Signale erfolgen. Die spektralen Eigenschaften dieser Verstärkung sind jedoch von dem verstärkenden Material abhängig und hierdurch für dessen spätere Anwendung dauerhaft festgelegt und können nicht für jede Anwendung optimale Bedingungen gewährleisten.

In der EP 0 527 265 wird ein optischer Glasfaserverstärker mit einem ersten Verstärkungsfaserabschnitt innerhalb einer Faser mit einem Einzelmodenkern und einer lichtdämpfenden Einrichtung beschrieben, welche in Signalausbreitungsrichtung hintereinander angeordnet sind und voneinander verschiedene spektrale Absorptionseigenschaften aufweisen. Hierdurch soll eine Verstärkung innerhalb des Glasfaserverstärkers ermöglicht werden, welche im wesentlichen nur Signalanteile verstärkt. Nachteilig ist dieser Anordnung jedoch, daß durch die serielle bzw. Hintereinander-Anordnung der verstärkenden Elemente auch absorbierende spektrale Anteile hintereinander geschaltet werden und somit sowohl zusätzliche Absorptionen auftreten als auch eine Verlängerung der Übertragungsstrecke stattfindet.

Die EP 0 522 201 lehrt, das Verstärkungsspektrum eines Faserverstärkers mit einem Einzelmodenkern durch eine lichtdämpfende Glasfasereinrichtung derart zu beeinflussen, daß die optische Leistung bei einer Signalwellenlänge im wesentlichen nicht beeinflußt wird aber dennoch in anderen spektralen Bereichen eine Dämpfung stattfindet. Nachteilig ist bei derartigen Faserverstärkern mit Einzelmodenkern jedoch, daß im wesentlichen nur festgelegte, nicht beeinflußbare Verstärkungsspektren realisierbar sind, welche momentane Änderungen nicht berücksichtigen können.

Es wurden gemäß der US 5,993,552 A bereits Anstrengungen unternommen, durch eine spektral angepaßte Dämpfung von Eingangssignalen eines optischen Verstärkers Ausgangssignale des Verstärkers zu erzeugen, die ein verbessertes spektrales Verhalten aufweisen. Jedoch verschlechtert eine Dämpfung von Eingangssignalen generell die Signalqualität, insbesondere die Bitfehlerrate, so daß derartige Konzepte, gerade dann, wenn bereits nur noch schwache Signale vorhanden sind, etwa bei der langreichweitigen Übertragung optischer Signale, eher unerwünscht sind. Nachteilig ist dieser Vorgehensweise auch, daß durch eine stärkere Schwächung von intensiveren Signalanteilen und deren nachträglich höhere Verstärkung alle Störsignalanteile auch eine höhere Verstärkung erfahren.

Ferner sind optische Demultiplexer und Multiplexer Schlüsselbauelmente optischer Frequenzmultiplex- (OFDM) und Wellenängenmultiplex- (WDM) Kommunikationssysteme und werden beispielsweise beschrieben in W. J. Tomlinson "Wavelenght multiplexing in multimode optical fibers", Appl. Opt. 16, pp. 2180-2194 (1977), in Y. Ishii and T. Kubota "Wavelength demultiplexer in multimode fiber that üses optimized holographic optical elements", Appl. Opt. 32, pp. 4415-4422, (1993) und in S. Sasaki, K. Sekine and N. Kikuchi "Wavelength division-multiplexing transmission technologies" IOOC'95, ThC3-3, pp. 80-81 (1995).

Eine besonders bevorzugte Klasse optischer signalübertragender Einrichtungen umfasst Arrayed Waveguide Grating (AWG) Strukturen, die nachfolgend abgekürzt als AWGs bezeichnet werden und welche beispielsweise beschrieben sind in US 5,136,671 A, erteilt für Dragone, 1992; US 5,243, 672 A, erteilt für Dragone, 1993; US 5,440,416, erteilt für Colien et al., 1995; M. K. Smit, "New focusing and dispersive planar component based on an optical phased array" Electron. Lett., pp. 385-386, 1988; C. Dragone, "Efficient NxN Star Couplers using Fourier Optics" IEEE J. Lightwave Technol. 7, pp. 479-489, 1989. WO9942872 und EP0617527 offenbaren die Benutzung von gesättigten Verstärkern in Kombination mit AWGs.

Der Erfindung liegt die Aufgabe zu Grunde, eine Einrichtung zur Übertragung optischer Signale bereitzustellen, bei welcher die Signalqualität beim Durchlaufen dieser Einrichtung möglichst wenig verschlechtert und insbesondere die Bitfehlerrate der übertragenen Signale möglichst wenig erhöht wird, welche darüber hinaus insbesondere flexibel an sich ändernde Signalbedingungen, wie beispielsweise die Signalintensität und die spektralen Eigenschaften des Signals anpassbar sind.

Es besteht ferner der Wunsch, neben einer möglichst guten Signalübertragung polarisationsarme, kompakte und preisgünstige Bauelemente zur Verfügung zu haben.

Eine besonders vorteilhafte Lösung dieser Aufgabe wird bereits mit einer optischen Einrichtung mit den Merkmalen des Anspruchs 1 erreicht. Eine weiter höchst vorteilhafte Lösung dieser Aufgabe ergibt sich durch ein Verfahren im Anspruch 25 definiert.

Durch die vordefinierte Absorption des verstärkenden Materials der Einrichtung gemäß Anspruch 1 kann eine nahezu optimale Übertragung von optischen Eingangssignalen in einem weiten Bereich der Eingangslichtintensitäten, insbesondere in Abhängigkeit von deren spektralen Eigenschaften erfolgen. Ist etwa ein spektraler Anteil eines Eingangssignals sehr schwach, so kann durch Steuerung der Pumplichtintensität dieses Signal ohne weitere Verluste einzubringen bereits so an dessen Eingangsintensität angepaßt verstärkt werden, daß nach Verstärkung die gewünschte Intensität vorliegt ohne daß eine irgendwie geartete Schwächung der Signalintensität auftreten muß.

Ist eine andere spektrale Komponente eines Eingangssignals etwas stärker, so kann in diesem spektralen Bereich eine etwas geringere Verstärkung erfolgen, ebenfalls im wesentlichen ohne eine Verschlechterung der Übertragungsqualität, wie etwa der Bitfehlerrate.

Ist jedoch ein spektraler Anteil eines Eingangssignals bereits zu stark in dessen Intensität für die weitere Übertragungsstrecke, so kann das verstärkende Material in Abwesenheit oder nur geringer Anwesenheit von Pumplicht eine definierte Absorption erzeugen, bei welcher weniger Rauschphotonen am Ausgang der Übertragungsstrecke eingebracht werden als bei einer vorher der Verstärkung erfolgenden starken Abschwächung, wie diese aus dem Stand der Technik bekannt ist.

Somit lassen sich mit einem Verstärker gemäß der Erfindung, extrem breitbandige Verstärker mit spektral hochselektiv einstellbarem Verhalten vorteilhaft verwirklichen.

Bevorzugte Werte der Absorption betragen ohne Einstrahlung von Pumplicht 0,1 bis 10 dB/cm besonders bevorzugte Werte der Absorption betragen 0,5 bis 5 dB/cm und die am meisten bevorzugte Werte der Absorption betragen 1 bis 3 dB/cm.

Wenn der Wellenleiter darüber hinaus Teil eines AWG (Arrayed Waveguide Grating) ist, können hiermit die spektralen Eigenschaften des AWG auch in selektiver Weise bzw. für schmalbandige spektrale Transmissionskurven vorteilhaft beeinflußt werden.

Bei einer besonders bevorzugten Ausführungsform weist eine Vielzahl von Armen des AWG einen dotierten Bereich auf, welcher ein Material umfaßt das zur Verstärkung optischer Signale geeignet ist, und ist den dotierten Bereichen jeweils eine Pumplichtquelle zugeordnet, so daß jeder Arm des AWG eigenständig als Verstärkungs- oder Dämpfungsglied nutzbar ist.

Hierdurch wird eine besonders vorteilhafte optische Einrichtung zur Verfügung gestellt, welche eine spektral einstellbare Verstärkung oder Dämpfung umfasst.

Wenn jedem Wellenleiter eine Monitordiode zugeordnet ist, welche die Lichtintensität nach zumindest einem Teil des dotierten Bereichs erfaßt, kann hierdurch eine aktive Regelung dieser Verstärkungsstrecke vorgenommen werden.

In vorteilhafter Weise ist die Pumplichtleistung basierend auf der mit der Monitordiode erfassten Lichtintensität einstellbar und können derart vordefinierte Ausgangsleistungen oder Verstärkungsfaktoren der optischen Verstärkung vorgegeben und realisiert werden.

Besonders vorteilhaft ist es hierbei, wenn die passive Glas-Wellenleiteranordnung und die aktive Wellenleiteranordnung zweidimensionale Oberflächenwellenleiteranordnungen sind, welche mittels eines LTB-Verfahrens miteinander verbunden sind, denn hierdurch kann Freiheit von thermischen Spannungen bei höchster optischer Qualität erreicht werden.

Wenn die Einrichtung zur spektralen Trennung ein in der passiven Glas-Wellenleiteranordnung ausgebildeter optischer Multiplexer ist, kann hierdurch eine sehr scharfe spektrale Trennung der Signalanteile auf sehr kleinem Raum vorgenommen werden.

Bevorzugt ist die Einrichtung zur Vereinigung der verstärkten optischen Signale ein in der passiven Glas-Wellenleiteranordnung ausgebildeter optischer Kombinierer.

Bei der bevorzugten Ausführungsform ist zumindest eine Pump-Laserdiode an die passiven Glas-Wellenleiteranordnung angeschlossen und hat vorzugsweise einen Wellenlänge oder einen Wellenlängenbereich von 980 nm bis 1480 nm.

Vorteilhaft umfasst das optisch verstärkende Material Erbium und/(Er) oder eine Kombination von Erbium und Ytterbium (Er Yb).

Von besonderem Vorteil ist es, wenn hierbei die Länge des verstärkenden Bereichs für verschiedene spektrale Anteile des zu verstärkenden Lichtes verschieden groß ist, denn auf diese Weise kann eine geringere Verstärkung eines bestimmten spektralen Bereiches durch eine längere Verstärkungsstrecke kompensiert werden.

Wenn die Stelle der Einkopplung des Pumplichtes für verschiedene spektrale Anteile des zu verstärkenden Lichtes in Bezug auf die zurückgelegte optische Weglänge innerhalb des verstärkenden Materials verschieden ist, kann die effektive Wechselwirkungslänge des Pumplichtes mit dem zu verstärkenden Licht optimal oder auf vordefinierte Weise eingestellt werden.

Mit mehr als einem dotierten Bereich und mehr als einem optisch verstärkendes Material kann das Verstärkungsspektrum deutlich erweitert werden.

Besonders vorteilhaft ist es, wenn zumindest eine Pump-Laserdiode an die passiven Glas-Wellenleiteranordnung angeschlossen ist, welche Pumplicht in Ausbreitungsrichtung des zu verstärkenden Lichtes zuführt und zumindest eine Pump-Laserdiode an die passiven Glas-Wellenleiteranordnung angeschlossen ist, welche Pumplicht entgegengesetzt zur

Ausbreitungsrichtung des zu verstärkenden Lichtes zuführt, denn dann kann eine besonders effektive Einkoppelung des Pumplichts erreicht werden, bei welcher Streuverluste in dem Wellenleiter vermieden werden können.

Die Erfindung wird nachfolgend anhand der beigefügten Zeichnungen und unter Bezugnahme auf bevorzugte Ausführungsformen detaillierter beschrieben.

Es zeigen:
- Fig. 1: eine erste erfindungsgemäße Einrichtung zur Übertragung optischer Signale in Form eines optischen Moduls mit variabler Verstärkung und Dämpfung,
- Fig. 2: eine zweite erfindungsgemäße Einrichtung zur Übertragung optischer Signale in Form eines breitbandigen optischen Verstärkers, insbesondere in Form eines breitbandigen optischen Verstärkers mit spektral angepaßten Verstärkungseigenschaften,
- Fig. 3: eine schematische dargestellte weitere erfindungsgemäße Einrichtung zur Übertragung optischer Signale in Form eines AWG, insbesondere in Form eines AWG mit spektral angepaßten Verstärkungseigenschaften, als Weiterentwicklung der in Fig. 1 dargestellten Ausführungsform,
- Fig. 4: eine schematische dargestellte, nochmals weitere erfindungsgemäße Einrichtung zur Übertragung optischer Signale in Form eines AWG, insbesondere in Form eines AWG mit spektral angepaßten Verstärkungseigenschaften und spektral getrennten phasenmodulierenden bzw. phasenschiebenden Einrichtungen, als Weiterentwicklung der in Fig. 1 dargestellten Ausführungsform
- Fig. 5: eine schematische Darstellung des Einfluß der Verstärkung innerhalb der Arme des in Fig. 3 dargestellten AWG auf die spektrale Breite der übertragenen Signale,
- Fig. 6: eine exaktere Berechnung der spektralen Breite der in dem in Fig. 3 dargestellten AWG übertragenen Signale für 20 Arme des AWG, als Punktelinie dargestellt, und für 80 Arme des AWG, als durchgezogenen Linie dargestellt.

### Detaillierte Beschreibung bevorzugter Ausführungsformen

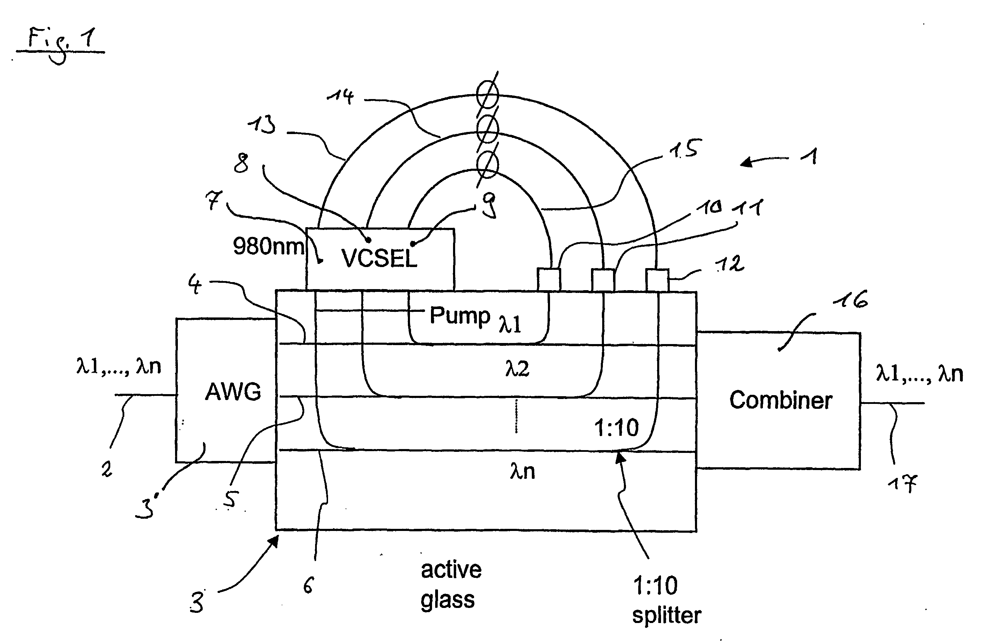

Nachfolgend wird die Erfindung anhand bevorzugter Ausführungsbeispiele detaillierter beschrieben und es wird zunächst auf Fig. 1 bezug genommen, welche eine erste erfindungsgemäße Einrichtung zur Übertragung optischer Signale in Form eines optischen Moduls mit variabler Verstärkung und Dämpfung zeigt.

Das in Fig. 1 dargestellte und im gesamten mit dem Bezugszeichen 1 versehene Modul umfasst einen optischen AWG (Arrayed Waveguide Grating), wie dieser beispielsweise in der DE 101 12 331 oder der DE 101 12 349 detaillierter beschrieben ist, deren Inhalt vollumfänglich zum Gegenstand der vorliegenden Anmeldung gemacht wird.

Ein optisches Signal wird in der Signalfaser 2 einem Freistrahlbereich 3' eines AWG 3 zugeführt, dessen einzelne Arme 4, 5, 6, von welchen nur drei beispielhaft in der Zeichnung dargestellt sind, zumindest jeweils einen Abschnitt aufweisen, der mit einem verstärkenden Material dotiert ist, wie beispielsweise einem Seltenen-Erden-Material, dieser Bereich ist in Fig. 1 beispielhaft mit active glas bezeichnet und in einem ansonsten im wesentlichen transparenten Substrat oder Trägermaterial ausgebildet.

Durch die erfindungsgemäß mögliche Verstärkung kann auch die Anzahl der Arme des AWG und damit dessen spektrale Auflösung sehr hoch sein. Es liegt im Rahmen der Erfindung AWGs mit mehr als 100 Armen, mit mehr als 400 Armen und insbesondere mit mehr als 1000 Armen bereitzustellen. Jede normale ganze Zahl an Armen n ≤ 10 000 kann in Abhängigkeit der zu erwünschten spektralen Auflösung gewählt und verwirklicht werden. Hierbei sind lithographische Techniken zur Strukturierung der Wellenleiter in der Oberfläche des Trägermaterials einsetzbar. Die Anpassung des Freistrahlbereichs 3' an diese erwünschte Anzahl der Arme ist einem Fachmann auf diesem Gebiet mit seinem Fachwissen möglich.

Es liegt ferner im Rahmen der Erfindung, Telluritgläser, Antimon enthaltende Gläser, Wismut enthaltende bzw. Wismutatgläser sowie oxidische Gläser aus diesen Verbindungen als verstärkende Materialien zu verwenden.

Bei der bevorzugten Ausführungsform sind die Arme des AWG 3 sowie ist der Freistrahlbereich 3' des AWG 3 innerhalb eines zweidimensionalen Substrates ausgebildet und sind die optischen Komponenten des Systems oder zumindest ein Teil dieser Komponenten mit einem LTB-Verfahren (Low-Temperature-Bonding-Verfahren) miteinander verbunden, wie diese in der PCT US 00/41720 und der PCT US 00/41721 sowie deren prioritätsbegründender Voranmeldung beschrieben ist.

Das Substrat, in dem die Wellenleiter ausgebildet sind kann aus Glas, Quarzglas, Silicium, einem Halbleitermaterial, wie beispielsweise Indium- oder Galliumarsenid oder kann auch aus einem Kunsstoff, beispielsweise einem Polycarbonatmaterial, bestehen und ist nicht auf bestimmte Trägermaterialien beschränkt.

An vorzugsweise jeden Arm 4, 5, 6 des AWG 3 ist jeweils eine eigene Pumplaserdiode 7, 8, 9 angeschlossen, welche in deren Intensität eigenständig regelbar ist.

Vorzugsweise jeder Pumplaserdiode 7, 8, 9 ist eine eigene Monitordiode bzw. Photodiode 10, 11, 12, zugeordnet, welche aus dem jeweiligen Arm 4, 5, 6 Licht empfängt, wobei die Pumplaserdioden 7, 8, 9 in Fig. 1 als einziger monolithischer Block dargestellt sind und zusammen mit deren elektronischer Ansteuerung auf einem gemeinsamen Halbleitersubstrat realisiert sein können.

Das, aus dem jeweiligen Arm 4, 5, 6 empfangene Licht ist durch einen dielelektrischen Strahlteiler (Splitter) in dessen Intensität vorzugsweise stark reduziert, so daß die hierdurch entstehenden Verluste minimal bleiben. Bevorzugte Teilerverhältnisse des Strahlteiers (Splitter) sind 1 zu 10, bevorzugt 1 zu 100 oder noch stärker bevorzugt 1 zu 1000 oder mehr als 1 zu 10 000.

Zur Regelung der Lichtintensität der Pumplaserdioden 7, 8, 9 sind den Photodioden 10, 11, 12 jeweils elektronische Verstärkungsstrecken 13, 14, 15 nachgeschaltet, welche jeweils eigenständig über eine einstellbare Verstärkung verfügen.

Ferner ist auch die absolute Lichtintensität der Pumplaserdioden 7, 8, 9, welche vorzugsweise als VCSEL (Vertical Cavity Surface emitting Laser) ausgebildet sind, durch externe, in den Zeichnungen nicht dargestellte Mittel einstellbar, so daß feste, voreingestellte spektrale Verstärkungsprofile elektronisch abrufbar realisierbar sind.

Hierdurch weist jeder der Arme 4, 5, 6 des AWG 3 eine unabhängig geregelte oder fest einstellbare Verstärkung auf.

Das Licht der Arme 4, 5, 6 wird in einem Koppler oder Kombinier 16 zusammengeführt und in eine Ausgangswellenleiterfaser 17 eingekoppelt.

Der Kombinierer 16 kann aus einem zweidimensionalen Wellenleiterkoppler, wie dieser einem Fachmann auf dem vorliegenden Gebiet bekannt ist, bestehen.

Durch die Dotierung mit dem verstärkenden Material weist jeder der Arme 4, 5, 6 eine von der Dotierungskonzentration abhängige, vorgebbare Absorption und damit einstellbare optische Dämpfung auf, wenn die durch das verstärkende Material erreichte Verstärkung bei geringem Pumplicht kleiner als die Dämpfung des Materials ist.

Ferner liegt es im Rahmen der Erfindung, auch zusätzliche Substanzen oder Gemische in den verstärkenden Bereich einzubringen, um etwa eine spektral wunschgemäß definierte Absorptionskurve zu erhalten oder die spektralen Verstärkungseigenschaften an den jeweils vorliegenden Arm des AWG anzupassen.

Wird die Pumplichtleistung größer kann die Verstärkung größer als die Dämpfung werden. Hierdurch lassen sich für jeden Arm 4, 5, 6 des AWG 3 Dämpfungs- und Verstärkungswerte eigenständig einstellen, so daß sich ein spektrales Übertragungsverhalten des optischen Moduls ergibt, welches in jedem spektralen Bereich von einer vorgebbaren Dämpfung bis zur Verstärkung reicht.

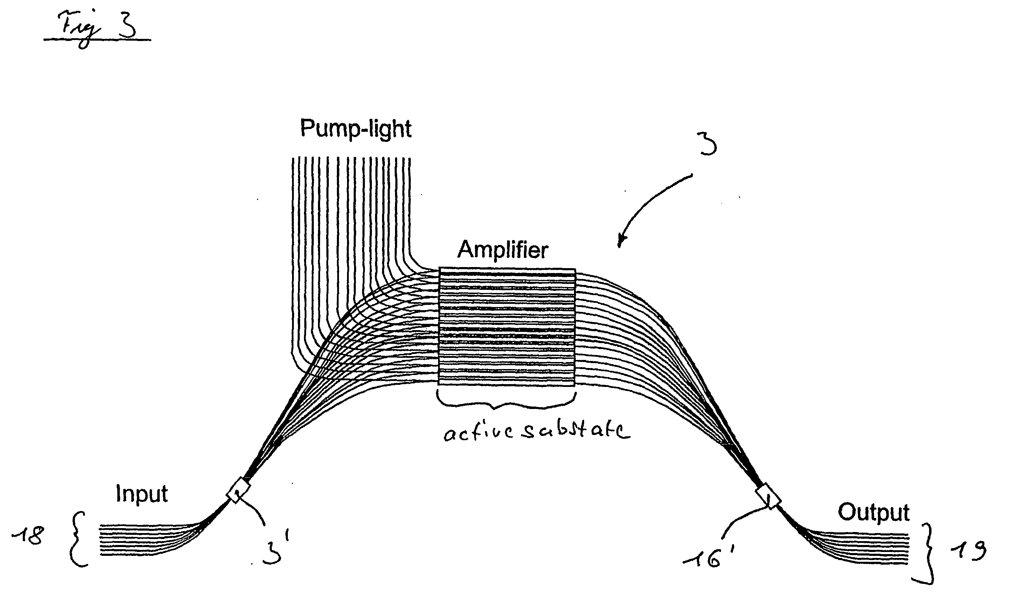

Fig. 3 zeigt schematisch einen AWG 3 mit acht Eingangssignalwellenleitern, n=8, welche beispielsweise acht Signalkanäle umfassen können mit jeweils m spektral benachbarten optischen Signalen bei den Wellenlängen λ1, λ2, λ3, ... λm in jedem dieser optischen Signale.

Durch den Freistrahlbereich 3' werden diese Signale den einzelnen Armen, deren Anzahl nur schematisch in Fig. 3 mit 17 Armen dargestellt ist, zugeführt und wird das in diesen Armen propagierende Licht, die wie vorstehend beschrieben, jeweils mit Hilfe eines Bereichs des verstärkenden Materials in den Pumplicht auf dem Fachmann bekannte Weise eingekoppelt wird optisch verstärkt. Jeder Arm des AWG 3 weist dabei einen eigenen Verstärker, in Fig. 3 mit Amplifier bezeichnet, auf, der eine unabhängige Einstellung der Verstärkung oder Dämpfung bzw. Schwächung des in diesem propagierenden Lichtes gestattet und der in dem mit active substrate bezeichneten Bereich liegt.

Nach Durchlaufen und Verstärkung oder Schwächung des Lichtes in den 17 Armen des AWG 3 wird deren Licht innerhalb des Freistrahlbereichs 16' auf m spektral benachbarte Ausgangswellenleiter 19 abgebildet und in diese eingekoppelt.

Ohne Beschränkung der Allgemeinheit hat in Fig. 3 die Anzahl m auch den Wert acht, die Erfindung ist jedoch nicht auf die Gleichheit von n und m beschränkt.

Diese erfindungsgemäße Ausführungsform ist hervorragend für den Betrieb als Frequenzdemultiplexer mit variabler Verstärkung und Dämpfung sowie mit variablen spektralen Übertragungseigenschaften geeignet, bei welcher die acht spektralen Anteile eines jeden Eingangssignals mit den Wellenlängen λ1, λ2, λ3, ... λm in die acht Ausgangswellenleiter 19 spektral getrennt einkoppelbar sind.

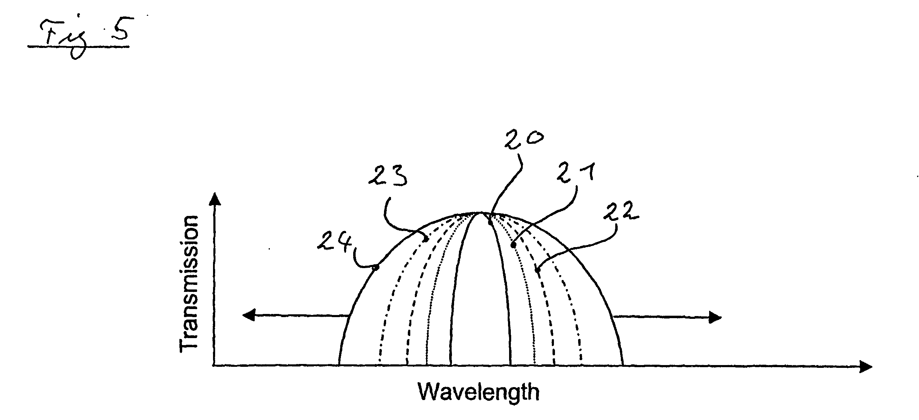

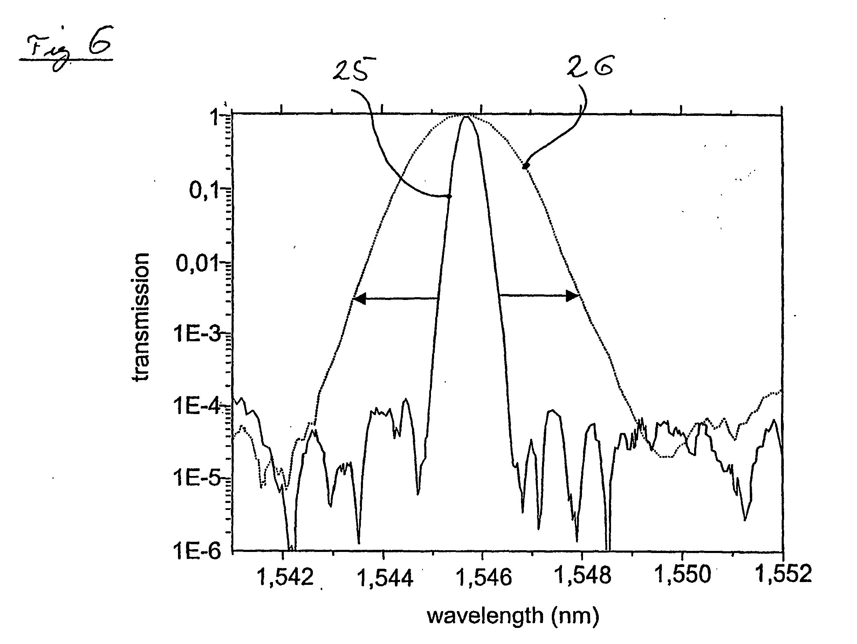

Die Variabilität der spektralen Breite der Übertragungsfunktion ist schematisch in Fig. 5 und exakter berechnet in Fig. 6 dargestellt. Werden alle Arme verstärkt, so wird die schmale, durchgezogen dargestellte spektrale Transmissionskurve 20 realisiert.

Werden einige Arme des AWG 3 durch hohe Absorption bzw. Dämpfung "abgeschaltet", bzw. weisen nur noch vernachlässigbare Signalintensitäten auf, verbreitert sich die spektrale Transmissionskurve auf die mit dem Bezugszeichen 21 versehene Kurve.

Um diese hohe Dämpfung, die einer Abschaltung gleichkommt betragen Werte der Absorption innerhalb des verstärkenden Bereichs durch Wahl der Dotierungsdichte des aktiven Materials und/oder durch zusätzliches Einbringen von absorbierenden Substanzen mit wählbarem Absorptionsspektrum, wie beispielsweise von Farbstoffen, ohne Einstrahlung von Pumplicht 0,1 bis 10 dB/cm, besonders bevorzugt 0,5 bis 5 dB/cm und am meisten bevorzugt 1 bis 3 dB/cm, während ansonsten in den verbleibenden Übertragungsbereichen eine möglichst absorptionsfreie Übertragung angestrebt wird.

Mit abnehmender Anzahl an übertragenden Armen werden nachfolgend die bei 22, 23 und 24 dargestellten spektralen Transmissionskurven verwirklicht und kann hierdurch ein Filter mit variabler spektraler Breite bereitgestellt werden, wie dieses für viele optische Anwendungen sehr wertvoll ist.

Durch derartige Filter kann beispielsweise eine Umsetzung aus einem ersten spektralen Kanalraster in ein zweites spektrales Kanalraster erfolgen, beispielsweise mit 200 GHz beabstandete Signale in ein Kanalraster mit 100 GHz überführt werden. Durch die Verstärkung in den Armen des AWG kann die Anzahl der Arme des AWG 3 erhöht und damit dessen spektrale Finesse verbessert werden.

Ferner kann auch die spektrale Form von Lasersignalen jeweils anwendungsgemäß in deren spektralen Verlauf und Intensität optimiert werden.

Fig. 6 zeigt die exakter berechneten spektralen Transmissionskurven für einen verlustfrei betriebenen AWG 3 mit der Transmissionskurve 25 für den Betrieb mit 80 verlustfrei übertragenden Armen und mit der Transmissionskurve 26 für den Betrieb mit 20 verlustfrei übertragenen Armen des AWG 3.

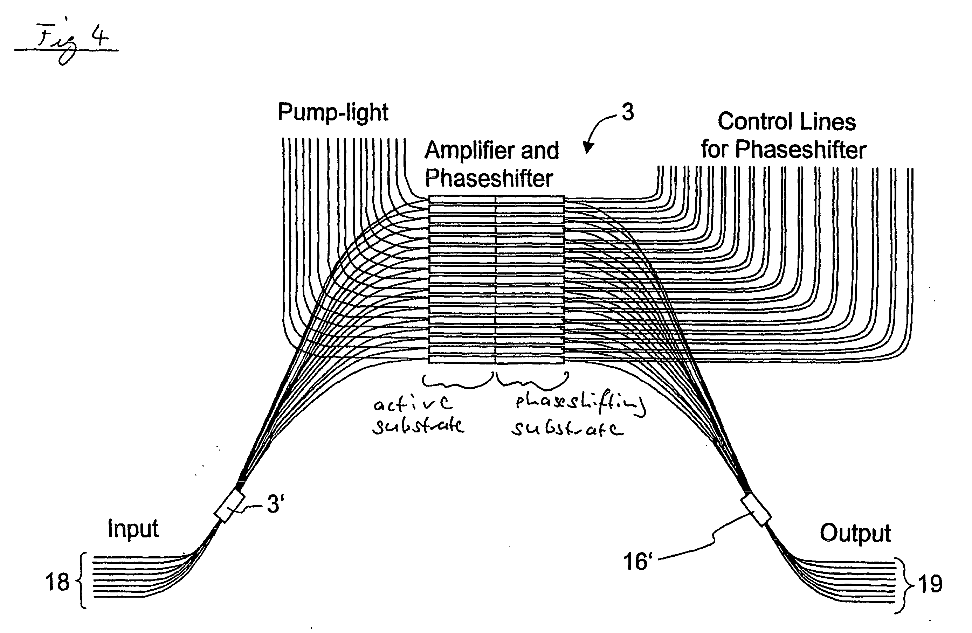

In Fig. 4 ist eine Weiterenwicklung des AWG 3 aus Fig. 3 dargestellt, bei welcher jeder Wellenleiter, der einen verstärkenden Bereich, d.h. einen aktiven Bereich, umfasst auch einen in dessen Phase modulierbaren Bereich enthält. Nur beispielhaft ist in Fig. 4 der auch als phase shifting substrate bezeichnete Bereich des Phasenmodulators in Signalausbreitungsrichtung gesehen nach dem aktiven Bereich angeordnet. Dieser Bereich kann ebenfalls vor dem verstärkenden Bereich angeordnet sein.

Der Phasenmodulator weist ein Material auf, dessen effektiver Brechungsindex änderbar ist, beispielsweise ein thermootpisches oder ein elektrooptisches Material wie beispielsweise LiNbO₃. Durch die Änderung des effektiven Brechungsindex kommt es zu einer Änderung der optischen Weglänge innerhalb des jeweiligen Arms des AWG 3, die auch als Phasenverschiebung des in diesem Arm propagierenden optischen Signals darstellbar ist, weshalb der Phasenmodulator auch als Phasenschieber bezeichnet wird.

Jeder Phasenmodulator oder Phasenschieber eines jeden Arms des AWG 3 weist eine eigene Anschlußleitung zur zugeordneten Steuerelektronik auf, wobei diese Anschlußleitung lediglich schematisch als Control Lines for Phaseshifter in Fig. 4 dargestellt ist.

Durch entsprechende Ansteuerung der Phasenmodulatoren oder Phasenschieber kann eine bei der Verstärkung auftretende Phasenverschiebung kompensiert werden oder können bauteilbedingte Schwankungen in der Länge der Arme des AWG 3 aktiv, beispielsweise mit Hilfe eines bekannten Referenzsignals und dessen spektraler Erfassung durch die zugeordnete, jedoch in den Figuren nicht dargestellte Steuerelektronik kompensiert werden. Ferner lassen sich hierdurch auch thermisch bedingte Schwankungen kompensieren.

Derartige optische Module lassen sich generell vorteilhaft in nachrichtentechnischen Systemen einsetzen, um deren Übertragungsverhalten erheblich zu verbessern, insbesondere um diese an erwünschte spektrale Intensitätsvorgaben für nachfolgende optische Signalübertragungs- und/oder - verarbeitungseinrichtungen anzupassen.

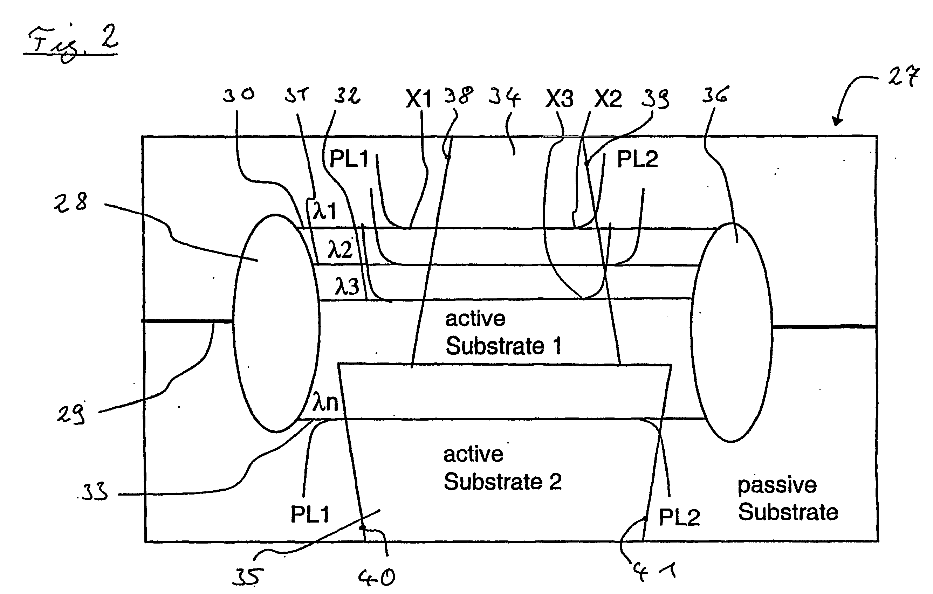

Bei der nachfolgenden Beschreibung des zweiten erfindungsgemäßen Ausführungsbeispiels wird auf Fig. 2 bezug genommen, welche einen breitbandigen optischen Verstärker zeigt.

Ein breitbandiger optischer Verstärker wird beispielsweise in der PCT US 00/41720 beschrieben.

Der im ganzen mit dem Bezugszeichen 27 versehene, in Fig. 2 dargestellte, breitbandige optische Verstärker umfasst eine Einrichtung 28 zur spektralen Trennung, beispielsweise einen AWG, ein Strahlteilersystem mit verschiedenen schmalbandigen Filtern oder ein Prisma, zur spektralen Trennung von optischen Eingangssignalen, welcher ein Eingangswellenleiter 29 optische Signale mit verschiedenen spektralen Lagen oder Bereichen λ1, λ2, λ3, ... λn zuführt.

Diese spektralen Anteile λ1, λ2, λ3, ... λn werden nach deren spektraler Trennung jeweils eigenen zugeordneten Wellenleitern 30, 31, 32, 33 zugeführt, welche jeweils zumindest einen Abschnitt 34, 35 mit optisch verstärkendem Material 20 aufweisen.

Nach dem Abschnitt mit verstärkendem Material führen die Wellenleiter 30, 31, 32, 33 das verstärkte Licht zu einer Einrichtung zur Vereinigung der verstärkten optischen Signale (Combiner) 36.

Die einzelnen, vorstehend aufgeführten Komponenten des Verstärkers 27 sind, soweit diese auf mehr als einem optischen Substrat realisiert sind, vorzugsweise mit einem LTB-Verfahren miteinander verbunden. Die Beschreibung dieses LTB-Verfahrens wurde vorstehend durch Bezugnahme hier vollständig mit inkorporiert.

Der Bereich mit verstärkendem Material definiert eine aktive Wellenleiteranordnung, welche den dotierten Bereich aufweist, innerhalb dessen jeweils ein optisch verstärkendes Material angeordnet ist und die Wellenleiter 30, 31, 32, 33 definieren außerhalb des aktiven Bereichs, die als active Substrate 1 und als active Substrate 2 bezeichnet sind, jeweils herkömmliche zweidimensionale, in der Oberfläche eines optischen Substrates angeordnete Wellenleiter.

Die Einrichtung 28 zur spektralen Trennung ist in der am meisten bevorzugten Ausführungsform ein in der passiven Glas-Wellenleiteranordnung ausgebildeter optischer Multiplexer, beispielsweise ein AWG, und die Einrichtung zur Vereinigung der verstärkten optischen Signale (Combiner) ein in der passiven Glas-Wellenleiteranordnung ausgebildeter optischer Kombinierer, beispielsweise ein Wellenleiterkoppler.

Eine Pump-Laserdiode PL1 ist jeweils einzeln an jeden der Wellenleiter 21, 22, 23, 24 der passiven Glas-Wellenleiteranordnung angeschlossen und hat vorzugsweise eine Wellenlänge von 980 nm oder 1480 nm oder emittiert breitbandig über diesen gesamten Wellenlängenbereich von 980 nm bis 1480 nm, wobei das optisch verstärkende Material ein Seltene-Erden-Element oder eine Mischung von Seltenen-Erden-Elementen, vorzugsweise Erbium und/(Er) oder eine Kombination von Erbium und Ytterbium (Er Yb) umfasst.

Die Pump-Laserdiode PL1 führt Pumplicht in der Ausbreitungsrichtung des zu verstärkenden Lichtes zu.

In einer vereinfachten Form der Erfindung speist die Pump-Laserdiode alle Wellenleiter 21, 22, 23. In diesem Falle sind die nachstehend beschriebenen weiteren Maßnahmen zur spektralen Beeinflussung der Verstärkung besonders vorteilhaft, sind jedoch nicht auf diese Ausführungsform beschränkt.

Die Länge des verstärkenden Bereichs ist für verschiedene spektrale Anteile des zu verstärkenden Lichtes verschieden groß, dies bedeutet, daß die Länge, über welche Pumplicht zur Verfügung gestellt wird für die verschiedenen spektralen Komponenten λ1, λ2, λ3, ... λn verschieden groß ist.

Dies wird in der beigefügten Zeichnung durch die trapezoide Form des aktiven Bereichs (active Substrate 1 und active Substrate 2) schematisch mit den diesen Bereich berandenden Linien 38, 39, 40, 41 angedeutet.

Diese Längenänderung des verstärkenden Materials ist jedoch nicht auf lineare bzw. trapezförmige Änderungen beschränkt sonder kann im wesentlichen für jede spektrale Komponenete λ1, λ2, λ3 , ... λn frei gewählt werden.

Hierdurch kann beispielsweise die jeweilige Länge der verstärkenden Strecke der Wellenleiter 30, 31, 32, 34 invers zur spektralen Verstärkung des Verstärkungsmaterials innerhalb des active Substrate 1 und des active Substrate 2 ausgewählt werden, um eine spektral konstante Verstärkungsfunktion bereitzustellen oder kann an spektrale Verluste eines Übertragungsystems angepasste Längen aufweisen.

Darüberhinaus können die Wellenleiter 30, 31, 32, 34 auch nicht-äquidistant angeordnet werden, so daß sogar bei trapezförmigen verstärkenden Bereichen active Substrate 1 und active Substrate 2 in Abhängigkeit von den Innenwinkeln der Schenkel der Trapeze und der Beabstandung der Wellenleiter 30, 31, 32, 34 nahezu beliebig spektral vordefinierbare Verstärkungsprofile realisierbar sind.

Ferner können durch photolithographische Maskierungs- und Oberflächenbehandlungstechniken verstärkende Materialien mit nahezu beliebigen Geometrien für den verstärkenden Bereich des active Substrate 1 und des active Substrate 2 in die Wellenleiter 30, 31, 32, 34 eingebracht werden.

Darüber hinaus kann die Stelle der Einkopplung X1, X2, X3 des Pumplichtes PL1, PL2 für verschiedene spektrale Anteile des zu verstärkenden Lichtes in Bezug auf die zurückgelegte optische Weglänge innerhalb des verstärkenden Materials verschieden gewählt werden, so daß auch hierdurch eine effektive Wechselwirkungslänge zwischen Pumplicht und zu verstärkendem Licht spektral einstellbar ist.

Bei der bevorzugten Ausführungsform existiert mehr als ein dotierter Bereich active Substrate 1 bzw. active Substrate 2 und wird zur Verbesserung mehr als ein optisch verstärkendes Material eindotiert, um die Breitbandigkeit des Verstärkers zu unterstützen. So können beispielsweise die Wellenleiter 21, 22, 23, 24 jeweils spektral optimierte verschiedene aktive Materialien umfassen oder können mehrere Wellenleiter durch deren angepasste Wechselwirkungslänge des zu verstärkenden Lichtes mit dem Pumplicht jeweils das gleiche aktive Material aufweisen.

Neben der zumindest einen Pump-Laserdiode PL1, welche Pumplicht in Ausbreitungsrichtung des zu verstärkenden Lichtes zuführt umfasst die am meisten bevorzugteste Ausführungsform zumindest eine weitere Pump-Laserdiode PL2, welche an die passiven Glas-Wellenleiteranordnung angeschlossen ist und welche Pumplicht entgegengesetzt zur Ausbreitungsrichtung des zu verstärkenden Lichtes zuführt.

Mit den vorstehend beschriebenen Maßnahmen ist es möglich, einen sehr breitbandigen Verstärker mit höchster optischer Qualität zu verwirklichen.

Darüber hinaus ist es möglich, vordefinierte spektrale Verstärkungsprofile zu erzeugen, welche jeweils innerhalb der Wellenleiter 30, 31, 32, 34 der erwünschten Verstärkung entsprechende i) Materialien, ii) Wechselwirkungslängen von Pumplicht und zu verstärkendem Licht und/oder iii) den Wellenleitern 21, 22, 23, 24 zugeordnete Einkoppelungsstellen des Pumplichtes aufweisen.

Bei der bevorzugten Ausführungsform sind die einzelnen Komponenten des Verstärkers mit einem LTB-Verfahren (Low-Temperature-Bonding-Verfahren) miteinander verbunden, wie dieses durch Bezugnahme vollumfänglich zum Gegenstand der vorliegenden Beschreibung gemacht werden.

## Patentansprüche

1. Einrichtung zur Übertragung optischer Signale umfassend
zumindest einen Wellenleiter mit einem dotierten Bereich, welcher ein Material enthält, das zur Verstärkung optischer Signale geeignet ist,
bei welchem der dotierte Bereich eine vordefinierte Absorption aufweist und durch Einstrahlung von pumplicht in dessen Verstärkung änderbar ist und
ferner umfassend eine Einrichtung zur Trennung von spektralen Anteilen optischer Signale,
bei welchem
dem Wellenleiter eine Monitordiode zugeordnet ist,
welche die Lichtintensität nach dem Durchlaufen des Lichts von zumindest einem Teil des dotierten Bereichs erfaßt.

2. Einrichtung zur Übertragung optischer Signale nach Anspruch 1,
**dadurch gekennzeichnet,**
**daß** der Wellenleiter Teil eines Arrayed Waveguide Grating (AWG) ist.

3. Einrichtung zur Übertragung optischer Signale nach Anspruch 1 oder 2,
**dadurch gekennzeichnet,**
**daß** dem dotierten Bereich des Wellenleiters zumindest eine Pumplichtquelle zugeordnet ist.

4. Einrichtung zur Übertragung optischer Signale nach Anspruch 2
**dadurch gekennzeichnet,**
**daß** eine Vielzahl von Armen des Arrayed-Waveguide grating einen dotierten Bereich aufweist, welcher jeweils ein Material umfaßt welches zur Verstärkung optischer Signale geeignet ist, und
**daß** dem dotierten Bereichen jeweils eine Pumplichtquelle zugeordnet ist.

5. Einrichtung zur Übertragung optischer Signale nach einem der vorstehenden Ansprüche,
**dadurch gekennzeichnet,**
**daß** die Pumplichtleistung basierend auf der mit der Monitordiode erfassten Lichtintensität einstellbar ist.

6. Einrichtung zur Übertragung optischer Signale nach einem der vorstehenden Ansprüche,
**dadurch gekennzeichnet,**
**daß** die Absorption im Bereich des Materials, das zur Verstärkung optischer Signale geeignet ist, ohne Einstrahlung von Pumplicht bevorzugt 0,1 bis 10 dB/cm, besonders bevorzugt 0,5 bis 5 dB/cm und am meisten bevorzugt 1 bis 3 dB/cm beträgt.

7. Einrichtung zur Übertragung optischer Signale, nach einem der vorstehenden Ansprüche, insbesondere optischer verstärker mit breitbandiger Verstärkung, umfassend
zumindest einen wellenleiter, der von der Einrichtung zur spektralen Trennung von optischen Signalen spektrale Anteile eines optischen Signals erhält,
zumindest einen Abschnitt mit dem optisch verstärkendem Material mit vordefinierter Absorption des verstärkenden Materials, welcher in dem zumindest einen Wellenleiter angeordnet ist,
sowie
eine Einrichtung zur Vereinigung der verstärkten optischen Signale.

8. Einrichtung nach Anspruch 7,
**dadurch gekennzeichnet,**
**daß** Komponenten der Einrichtung zur Übertragung optischer Signale mit einem Low-Temperature Bonding Verfahren miteinander verbunden sind.

9. Einrichtung nach Anspruch 7 oder 8,
**dadurch gekennzeichnet, daß**
der optische Verstärker eine passive Glas-Wellenleiteranordnung und eine aktive. Wellenleiteranordnung umfaßt, welche einen dotierten Bereich aufweist, innerhalb dessen ein optisch verstärkendes Material angeordnet ist.

10. Einrichtung nach Ansprüch 9,
**dadurch gekennzeichnet, daß**
der zumindest eine Wellenleiter sowie die passive Glas-Wellenleiteranordnung und die aktive Mellenleiteranordnung zweidimensionale Oberflächenwellenleiteranordnungen sind.

11. Einrichtung nach einem der Ansprüche von 9 bis 10,
**dadurch gekennzeichnet, daß**
die Einrichtung zur spektralen Trennung ein in der passiven Glas-Wellenleiteranordnung ausgebildeter optischer Demultiplexer, insbesondere ein Gitter oder ein Arrayed-Waveguide grating ist.

12. Einrichtung nach einem der vorstehenden Ansprüche von 9 bis 11,
**dadurch gekennzeichnet, daß**
die Einrichtung zur Vereinigung der verstärkten optischen Signale ein in der passiven Glas-Wellenleiteranordnung ausgebildeter optischer Kombinierer oder Multiplexer ist.

13. Einrichtung nach einem der vorstehenden Ansprüche, 9 bis 12,
**dadurch gekennzeichnet, daß**
zumindest eine Pump-Laserdiode an die passiven Glas-Wellenleiteranordnung angeschlossen ist, welche vorzugsweise eine Wellenlänge von 980 nm oder 1480 nm hat.

14. Einrichtung nach einem der vorstehenden Ansprüche,
**dadurch gekennzeichnet, daß**
das optisch verstärkende Material Erbium und/(Er) oder eine Kombination von Erbium und Ytterbium (Er Yb) umfasst.

15. Einrichtung nach einem der vorstehenden Ansprüche,
**dadurch gekennzeichnet, daß**
das optisch verstärkende Material Telluritgläser, Antimon enthaltende Gläser, Wismut enthaltende oder Wismutatgläser sowie oxidische Gläser aus diesen Verbindungen enthält.

16. Einrichtung nach einem der vorstehenden Ansprüche,
**dadurch gekennzeichnet, daß** die Länge des verstärkenden Bereichs für verschiedene spektrale Anteile des zu verstärkenden Lichtes verschieden groß ist.

17. Einrichtung nach einem der vorstehenden Ansprüche,
**dadurch gekennzeichnet, daß**
die Stelle der Einkopplung des Pumplichtes für verschiedene spektrale Anteile des zu verstärkenden Lichtes in Bezug auf die zurückgelegte optische Weglänge innerhalb des verstärkenden Materials verschieden ist.

18. Einrichtung nach einem der vorstehenden Ansprüche,
**gekennzeichnet durch** mehr als einen dotierten Bereich und **durch** mehr als ein optisch verstärkendes Material.

19. Einrichtung nach Anspruch 13,
**dadurch gekennzeichnet, daß**
zumindest eine Pump-Laserdiode an die passiven Glaswellenleiteranordnung angeschlossen ist, welche Pumplicht in Ausbreitungsrichtung des zu verstärkenden Lichtes zuführt
und
zumindest eine Pump-Laserdiode an die passiven Glas-Nellenleiteranordnung angeschlossen ist, welche Pumplicht entgegengesetzt zur Ausbreitungsrichtung des zu verstärkenden Lichtes zuführt.

20. Einrichtung gemäß einem der vorstehenden Ansprüche,
**dadurch gekennzeichnet, daß**
der zumindest eine Wellenleiter einen Phasenmodulator oder Phasenschieber enthält.

21. Einrichtung gemäß Anspruch 20,
**dadurch gekennzeichnet, daß**
der Phasenmodulator oder Phasenschieber eines jeden Wellenleiter getrennt von den Phasenmodulatoren oder Phasenschiebern anderer Wellenleiter ansteuerbar ist.

22. Einrichtung gemäß Anspruch 20 oder 21,
**dadurch gekennzeichnet, daß**
der Phasenmodulator oder Phasenschieber einen thermooptischen Modulator umfasst.

23. Einrichtung gemäß einem der Ansprüche 20 bis 22,
**dadurch gekennzeichnet, daß**
der Phasenmodulator oder Phasenschieber einen LiNbO₃-Modulator umfasst.

24. Einrichtung zur Steuerung der Intensität, der Phasenlage und/oder der sprektralen Breite eines optischen Signals umfassend eine Einrichtung zur Übertragung optischer Signale nach einem der Ansprüche von 1 bis 23.

25. Verfahren zur Übertragung optischer Signale,
insbesondere in einer Vorrichtung gemäß einem der vorstehenden Ansprüche mit zumindest einen Wellenleiter mit einem dotierten Bereiche welcher ein Material enthält, das zur Verstärkung optischer Signale geeignet ist und der eine vordefinierte Absorption aufweist,
- wobei spektrale Anteile optischer Signale getrennt Werden und
- wobei im dotierten Bereich mit vordefinierter Absorption durch Ändern der Pumplichtintensität ein spektraler Anteil abhängig von seiner Eingangslichtintensität verstärkt oder durch Erzeugen einer definierten Absorption abgeschwächt wird.

26. Verfahren gemäß Anspruch 25, wobei dem zumindest einem Wellenleiter eine Monitordiode zugeordnet ist, **dadurch gekennzeichnet, daß** die Lichtintensität mit der Monitordiode nach zumindest einem Teil des dotierten Bereichs erfaßt wird.

27. Verfahren gemäß Anspruch 26, **dadurch gekennzeichnet, daß** eine aktive Regelung der Verstärkung vorgenommen wird.

28. Verfahren gemäß Anspruch 26 oder 27, **dadurch gekennzeichnet, daß** die Pumplichtleistung basierend auf der mit der Monitordiode erfassten Lichtintensität eingestellt wird.

29. Verfahren gemäß einem der Ansprüche 25 bis 28, **dadurch gekennzeichnet, daß** die verstärkten oder abgeschwächten optischen Signale vereinigt werden.

30. Verfahren gemäß einem der Ansprüche 25 bis 29, **dadurch gekennzeichnet, daß** die spektralen Anteile optischer Signale mit einem in einer passiven Glas-Wellenleiteranordnung ausgebildeten optischer Demultiplexer, insbesondere einem Gitter oder einem Arrayed-Waveguide grating getrennt werden.

31. Verfahren gemäß einem der Ansprüche 25 bis 30, **dadurch gekennzeichnet, daß** das Pumplicht für verschiedene spektrale Anteile des zu verstärkenden Lichtes in Bezug auf die zurückgelegte optische weglänge innerhalb des verstärkenden Materials an verschiedenen Stellen eingekoppelt wird.

32. Verfahren gemäß einem der Ansprüche 25 bis 30, **dadurch gekennzeichnet, daß** die Phase des spektralen Anteils moduliert wird.

## Claims

1. A system for transmitting optical signals comprising at least one waveguide having a doped zone containing a material suitable for amplification of optical signals, wherein the doped zone has a predefined absorption and its amplification is variable by the inputting of pumped light and also comprising a device for separating spectral components of optical signals, wherein the waveguide has an associated monitor diode which detects the light intensity after the passage of the light through at least part of the doped zone.

2. A system for transmitting optical signals according to claim 1, **characterised in that** the waveguide is part of an arrayed waveguide grating (AWG).

3. A system for transmitting optical signals according to claim 1 or 2, **characterised in that** the doped zone of the waveguide has at least one pumped light source associated therewith.

4. A system for transmitting optical signals according to claim 2, **characterised in that** a plurality of arms of the arrayed waveguide grating has a doped zone each of which comprises a material suitable for amplification of optical signals and **in that** a pumped light source is associated with each of the doped zones.

5. A system for transmitting optical signals according to any one of the preceding claims, **characterised in that** the pumped light output is adjustable on the basis of the light intensity detected by the monitor diode.

6. A system for transmitting optical signals according to any one of the preceding claims, **characterised in that** the absorption in the region of the material suitable for the amplification of optical signals, without the inputting of pumped light, is preferably equal to 0.1 to 10 dB/cm, particularly preferably 0.5 to 5 dB/cm, and most preferably 1 to 3 dB/cm.

7. A system for transmitting optical signals according to any one of the preceding claims, particularly an optical amplifier with broadband amplification, comprising at least one waveguide which receives from the device for spectral separation of optical signals spectral components of an optical signal, at least one portion with the optically amplifying material with predefined absorption of the amplifying material, which is disposed in the at least one waveguide, and a device for combining the amplified optical signals.

8. A system for transmitting optical signals according to claim 7, **characterised in that** components of the device for transmitting optical signals are interconnected by a low temperature bonding process.

9. A system according to claim 7 or 8, **characterised in that** the optical amplifier comprises a passive glass waveguide arrangement and an active waveguide arrangement having a doped zone within which an optically amplifying material is disposed.

10. A system according to claim 9, **characterised in that** the at least one waveguide and the passive glass waveguide arrangement and the active waveguide arrangement are two-dimensional surface waveguide arrangements.

11. A system according to any one of claims 9 to 10, **characterised in that** the device for spectral separation is an optical demultiplexer constructed in the passive glass waveguide arrangement, particularly a grating or an arrayed waveguide grating.

12. A system according to any one of the preceding claims 9 to 11, **characterised in that** the device for combining the amplified optical signals is a multiplexer or optical combiner constructed in the passive glass waveguide arrangement.

13. A system according to any one of the preceding claims 9 to 12, **characterised in that** the at least one pumped laser diode is connected to the passive glass waveguide arrangement, which preferably has a wavelength of 980 nm or 1480 nm.

14. A system according to any one of the preceding claims, **characterised in that** the optically amplifying material is erbium (Er) and/or a combination of erbium and ytterbium (Er Yb).

15. A system according to any one of the preceding claims, **characterised in that** the optically amplifying material contains tellurite glasses, antimony-containing glasses, bismuth-containing or bismuthate glasses and oxidic glasses from these compounds.

16. A system according to any one of the preceding claims, **characterised in that** the length of the amplifying zone is different for different spectral components of the light for amplification.

17. A system according to any one of the preceding claims, **characterised in that** the place at which the pumped light is input is different for different spectral components of the light for amplification, in respect of the optical wavelength covered within the amplifying material.

18. A system according to any one of the preceding claims, **characterised by** more than one doped zone and by more than one optically amplifying material.

19. A system according to claim 13, **characterised in that** at least one pumped laser diode is connected to the passive glass waveguide arrangement and supplies pumped light in the direction of propagation of the light for amplification and at least one pumped laser diode is connected to the passive glass waveguide arrangement and supplies pumped light in the opposite direction to the direction of propagation of the light for amplification.

20. A system according to any one of the preceding claims, **characterised in that** the at least one waveguide contains a phase modulator or phase shifter.

21. A system according to claim 20, **characterised in that** the phase modulator or phase shifter of each waveguide is adapted to be controlled separately from the phase modulators or phase shifters of other waveguides.

22. A system according to claim 20 or 21, **characterised in that** the phase modulator or phase shifter comprises a thermo-optical modulator.

23. A system according to any one of claims 20 to 22, **characterised in that** the phase modulator or phase shifter comprises a LiNbO₂ modulator.

24. A system for controlling the intensity, phase position and/or spectral width of an optical signal comprising a system for transmitting optical signals according to any one of claims 1 to 23.

25. A method of transmitting optical signals, particularly in an apparatus according to any one of the preceding claims with at least one waveguide having a doped zone which contains a material suitable for amplification of optical signals and which has a predefined absorption, wherein spectral components of optical signals are separated and wherein in the doped zone with predefined absorption by changing the pumped light intensity a spectral component is amplified independently of its input light intensity or is weakened by generating a defined absorption.

26. A method according to claim 25, wherein a monitor diode is associated with the at least one waveguide, **characterised in that** the light intensity is detected with the monitor diode in accordance with at least a part of the doped zone.

27. A method according to claim 26, **characterised in that** an active control of the amplification is effected.

28. A method according to claim 26 or 27, **characterised in that** the pumped light output is adjusted on the basis of the light intensity detected with the monitor diode.

29. A method according to any one of claims 25 to 28, **characterised in that** the amplified or weakened optical signals are combined.

30. A method according to any one of claims 25 to 29, **characterised in that** the spectral components of optical signals are separated with an optical demultiplexer constructed in a passive glass waveguide arrangement, particularly a grating or an arrayed waveguide grating.

31. A method according to any one of claims 25 to 30, **characterised in that** the pumped light for different spectral components of the light for amplification is input at different points with respect to the optical wavelength covered inside the amplifying material.

32. A method according to any one of claims 25 to 30, **characterised in that** the phase of the spectral component is modulated.

## Revendications

1. Dispositif destiné à la transmission de signaux optiques, comportant
au moins un guide d'ondes avec une zone dopée, qui contient un matériau qui est approprié pour l'amplification de signaux optiques,
dans lequel la zone dopée présente une absorption prédéfinie, et dont l'amplification peut être modifiée par la radiation incidente de lumière de pompage, et
comportant en outre un dispositif de séparation de composantes spectrales de signaux optiques,
dans lequel une diode de contrôle est associée au guide d'ondes, laquelle détecte l'intensité lumineuse après le passage de la lumière par au moins une partie de la zone dopée.

2. Dispositif destiné à la transmission de signaux optiques selon la revendication 1,
**caractérisé en ce que** le guide d'ondes fait partie d'un réseau sélectif planaire (Arrayed Waveguide Grating) (AWG).

3. Dispositif destiné à la transmission de signaux optiques selon la revendication 1 ou 2,
**caractérisé en ce qu'**au moins une source de lumière de pompage est associée à la zone dopée du guide d'ondes.

4. Dispositif destiné à la transmission de signaux optiques selon la revendication 2,
**caractérisé en ce que**
une pluralité de bras du réseau sélectif planaire comporte une zone dopée, contenant chacun un matériau approprié pour l'amplification de signaux optiques, et
une source de lumière de pompage est associée à chaque zone dopée.

5. Dispositif destiné à la transmission de signaux optiques selon l'une quelconque des revendications précédentes,
**caractérisé en ce que** la puissance de la lumière de pompage est réglable sur la base de l'intensité lumineuse détectée par la diode de contrôle.

6. Dispositif destiné à la transmission de signaux optiques selon l'une quelconque des revendications précédentes,
**caractérisé en ce que** sans radiation incidente de lumière de pompage, l'absorption dans la zone du matériau qui est approprié pour l'amplification de signaux optiques est de préférence de 0,1 à 10 dB/cm, de façon particulièrement préférée de 0,5 à 5 dB/cm, et de façon la plus préférée de 1 à 3 dB/cm.

7. Dispositif destiné à la transmission de signaux optiques selon l'une quelconque des revendications précédentes, notamment un amplificateur optique à amplification à large bande, comportant
au moins un guide d'ondes, qui reçoit des composantes spectrales d'un signal optique du dispositif de séparation spectrale de signaux optiques,
au moins une section avec le matériau d'amplification optique à absorption prédéfinie du matériau d'amplification, qui est disposée dans le, au moins un, guide d'ondes,
ainsi que
un dispositif pour la recombinaison des signaux optiques amplifiés.

8. Dispositif selon la revendication 7,
**caractérisé en ce que** des composants du dispositif de transmission de signaux optiques sont reliés entre eux par un procédé de liaison à basse température (Low Temperature Bonding).

9. Dispositif selon la revendication 7 ou 8,
**caractérisé en ce que** l'amplificateur optique comporte un dispositif passif à guide d'ondes en verre et un dispositif actif à guide d'ondes, qui comporte une zone dopée, à l'intérieur de laquelle est disposé un matériau d'amplification optique.

10. Dispositif selon la revendication 9,
**caractérisé en ce qu'**au moins un guide d'ondes, ainsi que le dispositif passif à guide d'ondes en verre et le dispositif actif à guide d'ondes, sont des dispositifs à guides d'ondes de surface à deux dimensions.

11. Dispositif selon l'une des revendications 9 à 10,
**caractérisé en ce que** le dispositif de séparation spectrale est un démultiplexeur optique agencé dans le dispositif passif à guide d'ondes en verre, notamment une grille ou un réseau sélectif planaire.

12. Dispositif selon l'une quelconque des revendications précédentes 9 à 11,
**caractérisé en ce que** le dispositif pour la recombinaison des signaux optiques amplifiés est un combinateur ou un multiplexeur optique agencé dans le dispositif passif à guide d'ondes en verre.

13. Dispositif selon l'une quelconque des revendications précédentes 9 à 12,
**caractérisé en ce qu'**au moins une diode laser de pompage est raccordée au dispositif passif à guide d'ondes en verre, dont la longueur d'onde est de préférence de 980 nm ou de 1480 nm.

14. Dispositif selon l'une quelconque des revendications précédentes,
**caractérisé en ce que** le matériau d'amplification optique contient de l'erbium (Er) et/ou une combinaison d'erbium et d'ytterbium (Er Yb).

15. Dispositif selon l'une quelconque des revendications précédentes,
**caractérisé en ce que** le matériau d'amplification optique contient des verres de tellurite, des verres contenant de l'antimoine, des verres contenant du bismuth ou des verres de bismuthat, ainsi que des verres oxydiques constitués de ces composés.

16. Dispositif selon l'une quelconque des revendications précédentes,
**caractérisé en ce que** la longueur de la zone d'amplification est de différentes importances pour différentes composantes spectrales de la lumière à amplifier.

17. Dispositif selon l'une quelconque des revendications précédentes,
**caractérisé en ce que** l'emplacement de la modulation de la lumière de pompage pour différentes composantes spectrales de la lumière à amplifier est différent par rapport à la longueur optique parcourue à l'intérieur du matériau d'amplification.

18. Dispositif selon l'une quelconque des revendications précédentes,
**caractérisé par** plus d'une zone dopée, et par plus d'un matériau d'amplification optique.

19. Dispositif selon la revendication 13,
**caractérisé en ce que**
au moins une diode laser de pompage est raccordée au dispositif passif à guide d'ondes en verre, laquelle amène de la lumière de pompage dans le sens de propagation de la lumière à amplifier,
et
au moins une diode laser de pompage est raccordée au dispositif passif à guide d'ondes en verre, laquelle amène de la lumière de pompage dans le sens contraire au sens de propagation de la lumière à amplifier.

20. Dispositif selon l'une quelconque des revendications précédentes,
**caractérisé en ce que** le, au moins un, guide d'ondes contient un modulateur de phase ou un déphaseur.

21. Dispositif selon la revendication 20,
**caractérisé en ce que** le modulateur de phase ou déphaseur de chaque guide d'ondes peut être commandé séparément des modulateurs de phase ou déphaseurs d'autres guides d'ondes.

22. Dispositif selon la revendication 20 ou 21,
**caractérisé en ce que** le modulateur de phase ou déphaseur comporte un modulateur thermo-optique.

23. Dispositif selon l'une quelconque des revendications 20 à 22,
**caractérisé en ce que** le modulateur de phase ou déphaseur comporte un modulateur en LiNbO₃.

24. Dispositif destiné à la commande de l'intensité, de la position de phase et/ou de la largeur spectrale d'un signal optique, comportant un dispositif de transmission de signaux optiques selon l'une quelconque des revendications 1 à 23.

25. Procédé destiné à la transmission de signaux optiques, notamment dans un dispositif selon l'une quelconque des revendications précédentes, comportant au moins un guide d'ondes avec une zone dopée, qui contient un matériau qui est approprié pour l'amplification de signaux optiques, et qui présente une absorption prédéfinie,
- dans lequel des composantes spectrales de signaux optiques sont séparées, et
- dans lequel, une composante spectrale est amplifiée dans la zone dopée à absorption prédéfinie en fonction de son intensité lumineuse d'entrée par la modification de l'intensité de la lumière de pompage, ou atténuée par la génération d'une absorption définie.

26. Procédé selon la revendication 25, dans lequel une diode de contrôle est associée à le, au moins un, guide d'ondes,
**caractérisé en ce que** l'intensité lumineuse est détectée par la diode de contrôle après au moins une partie de la zone dopée.

27. Procédé selon la revendication 26,
**caractérisé en ce qu'**on effectue un réglage actif de l'amplification.

28. Procédé selon la revendication 26 ou 27,
**caractérisé en ce que** la puissance de la lumière de pompage est réglée sur la base de l'intensité lumineuse détectée par la diode de contrôle.

29. Procédé selon l'une quelconque des revendications 25 à 28,
**caractérisé en ce que** les signaux optiques amplifiés ou atténués sont recombinés.

30. Procédé selon l'une quelconque des revendications 25 à 29,
**caractérisé en ce que** les composantes spectrales de signaux optiques sont séparées par un démultiplexeur optique, notamment une grille ou un réseau sélectif planaire, agencé dans un dispositif passif à guide d'ondes en verre.

31. Procédé selon l'une quelconque des revendications 25 à 30,
**caractérisé en ce que** la lumière de pompage pour différentes composantes spectrales de la lumière à amplifier est modulée au niveau de différents emplacements par rapport à la longueur optique parcourue à l'intérieur du matériau d'amplification.

32. Procédé selon l'une quelconque des revendications 25 à 30,
**caractérisé en ce que** la phase de la composante spectrale est modulée.
